# EUROPÄISCHE PATENTSCHRIFT

(11) **EP 2 236 866 B1**
(45) Veröffentlichungstag und Bekanntmachung des Hinweises auf die Patenterteilung: **06.06.2012**
(21) Anmeldenummer: 10155407.9
(22) Anmeldetag: 04.03.2010
(51) Int. Cl.: F16J 15/18

(54) **Maschine zur Behandlung einer Fasersuspension**
Machine for processing a fibre suspension
Machine de traitement d'une suspension fibreuse

(30) Priorität: 01.04.2009 DE 102009015902
(43) Veröffentlichungstag der Anmeldung: 06.10.2010
(73) Patentinhaber: Voith Patent GmbH, 89522 Heidenheim (DE)
(72) Erfinder: Gottschalk, Gert, 88212, Ravensburg (DE)

(56) Entgegenhaltungen:
- DE-A1- 2 643 781
- DE-A1- 2 650 820
- DE-C- 843 937

## Beschreibung

Die Erfindung betrifft eine Maschine zur Behandlung einer Faserstoffsuspension mit einem Arbeitsraum in den zumindest eine rotierbare Welle mit wenigstens einem Behandlungselement geführt ist, wobei die Welle außerhalb des Arbeitsraumes gegenüber dem Gehäuse des Arbeitsraumes mittels einer Stopfbuchse abgedichtet und an dem vom Arbeitsraum weggewandten Ende der Stopfbuchse über eine Frei-Strecke ungestützt ist und Verstellmittel zur Beeinflussung der Dichtwirkung der Stopfbuchse im Bereich der Frei-Strecke vorhanden sind.

Derartige Vorrichtungen sind beispielweise aus den DE 2650820 A1, DE2643781 A1 und DE843937 C1 seit langem bekannt. Auf Grund der rauen Umgebung sind dabei immer noch Stopfbuchsdichtungen zur Abdichtung der drehenden Welle erfolgreich im Einsatz.

Diese Dichtungen bestehen im Wesentlichen aus der Stopfbuchspackung (der eigentlichen Dichtung) und einer Stopfbuchsbrille (einer flanschähnlichen Hülse), mit der die Stopfbuchspackung mittels Verstellmitteln, insbesondere Schrauben und/oder Federn axial verpresst wird. Durch die axiale Pressung entsteht auch eine radiale Pressung der Stopfbuchspackung auf der Welle. Dadurch wird der Dichtspalt auf ein den Betriebsbedingungen angepasstes Minimum eingestellt. Eine geringe Leckage ist nicht gänzlich auszuschließen.

Da man bei der Stopfbuchsdichtung nicht auf eine federnde Eigenelastizität des Dichtmaterials angewiesen ist, stehen eine Vielzahl von Materialien zur Verfügung wie Faserwerkstoffe, Graphit o.ä.

Daher kann bei hohen Temperaturen und/oder aggressiven Medien mit einer Stopfbuchse abgedichtet werden, wo andere Dichtungen schon längst versagen würden.

Ein weiterer Vorteil ist, dass bei Verschleiß der Dichtung durch Nachziehen der Verstellmittel und damit der Stopfbuchsbrille die Leckage wieder verringert werden kann.

Dabei gewährleistet die Frei-Strecke die ungehinderte Zugänglichkeit der Verstellmittel. Allerdings ist damit auch die Frei-Strecke der Welle frei zugänglich, was eine erhöhte Unfallgefahr bei einer Einstellung der Verstellmittel bei rotierender Welle mit sich bringt. Daher wird dies in der Regel nur bei Stillstand erlaubt, was mit entsprechenden Produktionsausfällen verbunden ist.

Die Aufgabe der Erfindung ist es daher den sicheren Zugang der Verstellmittel bei rotierender Welle zu ermöglichen.

Erfindungsgemäß wurde die Aufgabe dadurch gelöst, dass die Welle im Bereich der Frei-Strecke zumindest teilweise von einer an der Stopfbuchse befestigten Schutzabdeckung umgeben ist.

Diese Schutzabdeckung erlaubt den Zugang zu den Verstellmitteln der Stopfbuchse auch bei rotierender Welle.

Dabei führt die Befestigung der Schutzabdeckung an der Stopfbuchse, insbesondere ihrer Brille zu einer konstruktiv einfachen Lösung. Außerdem kann so relativ einfach und sicher die Zugänglichkeit der Verstellmittel beispielsweise durch eine Klappe oder Öffnung in der Schutzabdeckung ermöglicht werden.

Besonders vorteilhaft ist es jedoch, wenn die Verstellmittel der Stopfbuchse bereits außerhalb der Schutzabdeckung liegen und so ohne Hindernis zugänglich sind. Dabei kann die Schutzabdeckung an der Stopfbuchse, insbesondere ihrer Brille oder aber an einem Gehäuse der Maschine, insbesondere einem den Arbeitsraum beinhaltenden Gehäuse erfolgen.

Des Weiteren kann die Konstruktion noch dadurch vereinfacht werden, dass die Schutzabdeckung an oder über die Verstellmittel der Stopfbuchse fixiert ist. Bei der Nutzung der Verstellmittel als Befestigungselement für die Schutzabdeckung kann gleichzeitig auch die möglichst freie Zugänglichkeit der Verstellmittel leicht realisiert werden.

Dabei hat es sich als vorteilhaft erwiesen, wenn die Verstellmittel der Stopfbuchse von Schrauben gebildet werden, die die Brille der Stopfbuchse gegen die Stopfbuchspackung pressen.

Außerdem ist es zur Vereinfachung der Montage der Schutzabdeckung von Vorteil, wenn die Brille der Stopfbuchse Aussparungen zur Justierung der Schutzabdeckung besitzt.

Da mit einer Leckage der Stopfbuchse gerechnet werden muss, ist es vorteilhaft, wenn die Schutzabdeckung perforiert ausgebildet ist. Im einfachsten Fall kann die Perforation hierbei von Löchern in der Schutzabdeckung gebildet werden.

Auf diese Weise kann die Leckage problemlos aus dem Bereich der Stopfbuchse geführt werden. Außerdem kann so auch ein Temperaturausgleich zwischen der Stopfbuchse und der Umgebung erreicht werden.

Um eine Beschädigung der Vorrichtung im Bereich der Stopfbuchse auch bei einer erhöhten Verschmutzung zu vermeiden, sollte der Abstand zwischen der Welle und der Schutzabdeckung nicht zu klein sein. Dabei hat es sich als vorteilhaft erwiesen, wenn dieser zwischen 2 und 100 mm, vorzugsweise zwischen 5 und 30 mm liegt.

Da die Schutzabdeckung nur an der Stopfbuchse, konkret der Brille der Stopfbuchse befestigt ist, sollte diese zur Gewährleistung einer ausreichenden Stabilität und einer sicheren Vermeidung eines Kontaktes mit der drehenden Welle axial nicht zu lang sein. Andererseits ist für die Zugänglichkeit der Verstellmittel eine Mindestmaß erforderlich, weshalb die axiale Länge der Schutzabdeckung mit Vorteil zwischen 25 und 500 mm, vorzugsweise zwischen 70 und 300 mm liegen sollte.

In Abhängigkeit von der Art der Behandlung der Faserstoffsuspension und damit der zu übertragenden Antriebsleistung liegt der Durchmesser der Welle zwischen 20 und 500 mm, vorzugsweise zwischen 50 und 300 mm.

Mit Vorteil wird dabei das Behandlungselement von einem Rotor gebildet, wobei die Maschine als Pulper, Disperger, Refiner oder Sortierer ausgebildet ist.

Nachfolgend soll die Erfindung an einem Ausführungsbeispiel näher erläutert werden. In der beigefügten Zeichnung zeigt:
Figur 1: einen schematischen Querschnitt durch eine Welle 1 mit Stopfbuchse,
Figur 2: eine Gesamtansicht und
Figur 3: einen Querschnitt durch einen Pulper.

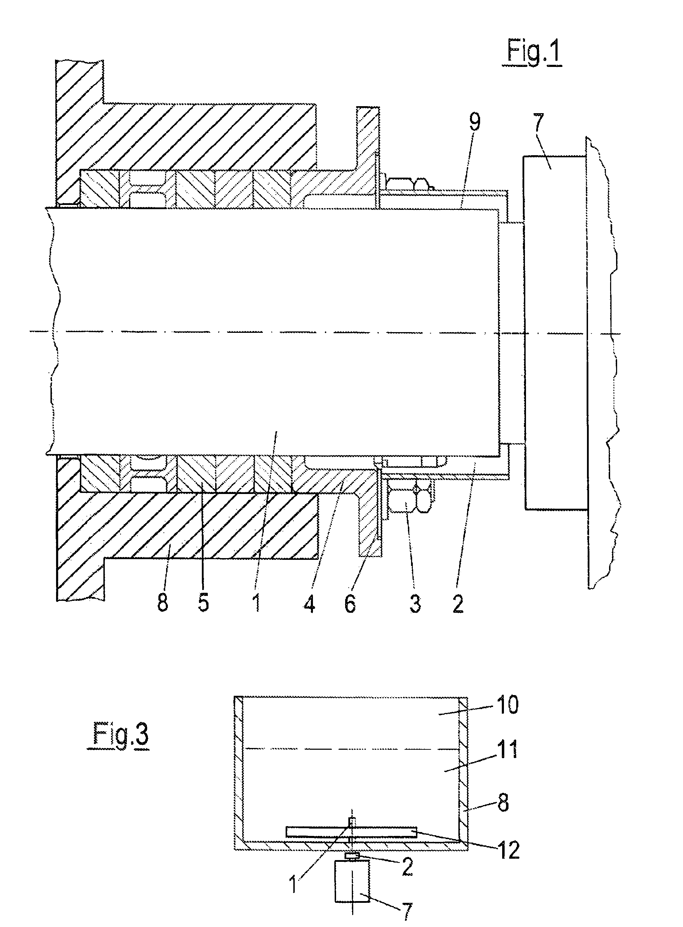

Bei der Maschine handelt es sich gemäß Figur 3 um einen Pulper zur Auflösung der Fasern und zur Bilder einer Faserstoffsuspension 11. Hierzu besitzt der noch oben offene Arbeitsraum 10 des Pulpers am Boden ein Behandlungselement 12 in Form eines antreibbaren Rotors.

Die erforderliche Antriebsleistung wird außerhalb des den Arbeitsraum 10 bildenden Gehäuses 8 von einem Antrieb 7 erbracht, der über eine rotierbar gelagerte Welle 1 mit dem Rotor im Arbeitsraum 10 verbunden ist.

Anwendbar ist die Erfindung jedoch auch bei anderen Behandlungsmaschinen, beispielsweise bei einem Refiner, Disperger oder einem Sortierer. Je nach Art der Maschine kann das Behandlungselement 12 dann als Wendel, Mahlgarnitur o.ä. ausgebildet sein.

Der Antrieb 7 kann dabei zur Drehzahlanpassung auch noch ein Getriebe umfassen.

Wie in Figur 1 zu erkennen, erfolgt die Abdichtung der rotierenden Welle 1 gegenüber dem Gehäuse 8 des Pulpers mit Hilfe einer Stopfbuchse. Wie allgemein bekannt, wird dabei eine dichtende Stopfbuchspackung 5 von einer flanschähnlichen Stopfbuchsbrille 4 mit Hilfe von Verstellmitteln 3, hier Schrauben axial verpresst. Durch die axiale Pressung entsteht auch eine radiale Pressung der Stopfbuchspackung 5 auf der Welle 1. Dadurch wird der Dichtspalt auf ein den Betriebsbedingungen angepasstes Minimum eingestellt. Eine geringe Leckage ist nicht gänzlich auszuschließen.

Die Verstellmittel 3 in Form achsparalleler Schrauben können hierbei zur Verstärkung der Anpressung der Stopfbuchspackung 5 (gegen einen Anschlag des Gehäuses 8) in das Gehäuse 8 gedreht werden.

Zwischen der Stopfbuchse und dem Antrieb 7, einem Getriebe oder einem Lager ist die Welle 1 über eine Frei-Strecke 9 normalerweise frei zugänglich. Dies erlaubt den Zugang zu den meist 4 bis 6 Verstellmitteln 3 der Stopfbuchse.

Falls die Verstellmittel 3 bei rotierender Welle 1 verstellt werden, so besteht eine nicht unerhebliche Gefahr des Monteurs durch einen Kontakt mit der Welle 1.

Um dies zu verhindern, besitzt die Welle 1 im Bereich der Frei-Strecke 9 eine Schutzabdeckung 2 aus Edelstahl. Diese Schutzabdeckung 2 hat zur Welle 1 etwa einen Abstand zwischen 15 und 30 mm und eine axiale Länge zwischen 70 und 300 mm.

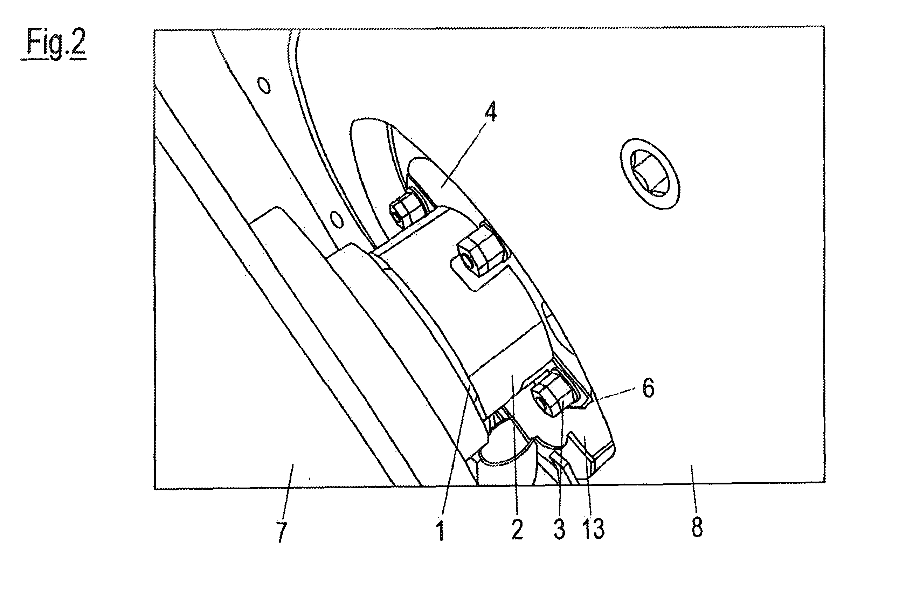

Des Weiteren ist die Schutzabdeckung 2 perforiert ausgebildet, so dass leckende Flüssigkeit aus der Schutzabdeckung 2 fließen und gesammelt werden kann. Hierzu befindet sich, wie in Figur 2 dargestellt, unter der Schutzabdeckung 2 eine Auffangrinne 13 zur Aufnahme der aus der Schutzabdeckung 2 austretenden Flüssigkeit.

Außerdem ermöglicht die Perforation einen Temperaturausgleich mit der Umgebung, so dass es zu keiner Überhitzung kommen kann.

Um die Zugänglichkeit der Verstellmittel 3 gewährleisten zu können, befinden sich diese radial außerhalb der Schutzabdeckung 2.

Die Befestigung der Schutzabdeckung 2 erfolgt über die Verstellmittel 3 selbst an der Brille 4 der Stopfbuchse. Zur Vereinfachung der Montage besitzt die Brille 4 Aussparungen 6 zur Justierung der Schutzabdeckung 2.

Bei dem hier gewählten Beispiel nehmen die Ausnehmungen 6 die Befestigungslaschen der Schutzabdeckung 2 auf, durch welche die Verstellmittel 3 geführt sind.

## Patentansprüche

1. Maschine zur Behandlung einer Faserstoffsuspension (11) mit einem Arbeitsraum in den zumindest eine rotierbare Welle (1) mit wenigstens einem Behandlungselement (12) geführt ist, wobei die Welle (1) außerhalb des Arbeitsraumes (10) gegenüber dem Gehäuse (8) des Arbeitsraumes (10) mittels einer Stopfbuchse abgedichtet und an dem vom Arbeitsraum (10) weg gewandten Ende der Stopfbuchse über eine Frei-Strecke (9) ungestützt ist und Verstellmittel (3) zur Beeinflussung der Dichtwirkung der Stopfbuchse im Bereich der Frei-Strecke (9) vorhanden sind, **dadurch gekennzeichnet, dass** die Welle (1) im Bereich der Frei-Strecke (9) zumindest teilweise von einer an der Stopfbuchse befestigten und perforiert ausgebildeten Schutzabdeckung (2) umgeben ist.

2. Maschine zur Behandlung einer Faserstoffsuspension (11) nach Anspruch 1, **dadurch gekennzeichnet, dass** die Verstellmittel (3) der Stopfbuchse außerhalb der Schutzabdeckung (2) liegen.

3. Maschine nach Anspruch 1 oder 2, **dadurch gekennzeichnet, dass** die Schutzabdeckung (2) an oder über die Verstellmittel (3) der Stopfbuchse fixiert ist.

4. Maschine nach einem der vorhergehenden Ansprüche, **dadurch gekennzeichnet, dass** die Verstellmittel (3) der Stopfbuchse von Schrauben gebildet werden, die die Brille (4) der Stopfbuchse gegen die Stopfbuchspackung (5) pressen.

5. Maschine nach einem der vorhergehenden Ansprüche, **dadurch gekennzeichnet, dass** die Brille (4) der Stopfbuchse Aussparungen (6) zur Justierung der Schutzabdeckung (2) besitzt.

6. Maschine nach einem der vorhergehenden Ansprüche, **dadurch gekennzeichnet, dass** der Abstand zwischen der Welle (1) und der Schutzabdeckung (2) zwischen 2 und 100 mm, vorzugsweise zwischen 5 und 30 mm liegt.

7. Maschine nach einem der vorhergehenden Ansprüche, **dadurch gekennzeichnet, dass** die axiale Länge der Schutzabdeckung (2) zwischen 25 und 500 mm, vorzugsweise zwischen 70 und 300 mm liegt.

8. Maschine nach einem der vorhergehenden Ansprüche, **dadurch gekennzeichnet, dass** der Durchmesser der Welle (1) zwischen 20 und 500 mm, vorzugsweise zwischen 50 und 300 mm liegt.

9. Maschine nach einem der vorhergehenden Ansprüche, **dadurch gekennzeichnet, dass** das Behandlungselement (12) von einem Rotor gebildet wird.

10. Maschine nach einem der vorhergehenden Ansprüche, **dadurch gekennzeichnet, dass** diese als Pulper, Disperger, Refiner oder Sortierer ausgebildet ist.

## Claims

1. Machine for processing a fibrous suspension (11), having a working chamber in which at least one rotatable shaft (1) having at least one processing element (12) is guided, the shaft (1) being sealed off outside the working chamber (10) with respect to the housing (8) of the working chamber (10) by means of a stuffing box and, on the end of the stuffing box facing away from the working chamber (10), being unsupported over a free section (9), and there being adjusting means (3) for influencing the sealing action of the stuffing box in the region of the free section (9),
**characterized in that**
the shaft (1) in the region of the free section (9) is at least partly surrounded by a protective covering (2) of perforated construction fixed to the stuffing box.

2. Machine for processing a fibrous suspension (11) according to Claim 1,
**characterized in that**
the adjusting means (3) of the stuffing box are located outside the protective covering (2).

3. Machine according to Claim 1 or 2,
**characterized in that**
the protective covering (2) is fixed to or over the adjusting means (3) of the stuffing box.

4. Machine according to one of the preceding claims,
**characterized in that**
the adjusting means (3) of the stuffing box are formed by screws which press the gland (4) of the stuffing box against the stuffing box packing (5).

5. Machine according to one of the preceding claims,
**characterized in that**
the gland (4) of the stuffing box has cut-outs (6) for adjusting the protective covering (2).

6. Machine according to one of the preceding claims,
**characterized in that**
the distance between the shaft (1) and the protective covering (2) is between 2 and 100 mm, preferably between 5 and 30 mm.

7. Machine according to one of the preceding claims,
**characterized in that**
the axial length of the protective covering (2) is between 25 and 500 mm, preferably between 70 and 300 mm.

8. Machine according to one of the preceding claims,
**characterized in that**
the diameter of the shaft (1) is between 20 and 500 mm, preferably between 50 and 300 mm.

9. Machine according to one of the preceding claims,
**characterized in that**
the processing element (12) is formed by a rotor.

10. Machine according to one of the preceding claims,
**characterized in that**
it is formed as a pulper, disperger, refiner or screen.

## Revendications

1. Machine de traitement d'une suspension fibreuse (11) comprenant une chambre de travail dans laquelle est guidé au moins un arbre rotatif (1) ayant au moins un élément de traitement (12), l'arbre (1) étant étanché à l'extérieur de la chambre de travail (10) vis-à-vis du boîtier (8) de la chambre de travail (10) au moyen d'un presse-étoupe, et étant libre à l'extrémité du presse-étoupe opposée à la chambre de travail (10) par le biais d'une section libre (9), et des moyens de réglage (3) pour influencer l'effet d'étanchéité du presse-étoupe étant prévus dans la région de la section libre (9), **caractérisée en ce que** l'arbre (1), dans la région de la section libre (9), est entouré au moins en partie par un recouvrement de protection (2) fixé sur le presse-étoupe et réalisé de manière perforée.

2. Machine de traitement d'une suspension fibreuse (11) selon la revendication 1, **caractérisée en ce que** les moyens de réglage (3) du presse-étoupe se situent à l'extérieur du recouvrement de protection (2).

3. Machine selon la revendication 1 ou 2, **caractérisée en ce que** le recouvrement de protection (2) est fixé sur ou par le biais des moyens de réglage (3) du presse-étoupe.

4. Machine selon l'une quelconque des revendications précédentes, **caractérisée en ce que** les moyens de réglage (3) du presse-étoupe sont formés par des vis qui pressent la lunette (4) du presse-étoupe contre la garniture (5) du presse-étoupe.

5. Machine selon l'une quelconque des revendications précédentes, **caractérisée en ce que** la lunette (4) du presse-étoupe possède des évidements (6) pour l'ajustement du recouvrement de protection (2).

6. Machine selon l'une quelconque des revendications précédentes, **caractérisée en ce que** la distance entre l'arbre (1) et le recouvrement de protection (2) est comprise entre 2 et 100 mm, de préférence entre 5 et 30 mm.

7. Machine selon l'une quelconque des revendications précédentes, **caractérisée en ce que** la longueur axiale du recouvrement de protection (2) est comprise entre 25 et 500 mm, de préférence entre 70 et 300 mm.

8. Machine selon l'une quelconque des revendications précédentes, **caractérisée en ce que** la diamètre de l'arbre (1) est compris entre 20 et 500 mm, de préférence entre 50 et 300 mm.

9. Machine selon l'une quelconque des revendications précédentes, **caractérisée en ce que** l'élément de traitement (12) est formé par un rotor.

10. Machine selon l'une quelconque des revendications précédentes, **caractérisée en ce que** celle-ci est réalisée sous forme de pulpeur, d'appareil à disperger, de raffineur ou tamiseur.
